# EUROPEAN PATENT SPECIFICATION

(11) **EP 1 890 970 B1**
(45) Date of publication and mention of the grant of the patent: **15.01.2014**
(21) Application number: 06768854.9
(22) Date of filing: 14.06.2006
(51) Int. Cl.: C02F 1/467, C02F 1/469, B01D 61/44, B01D 61/52

(54) **ELECTRODIALYSIS REVERSAL AND ELECTROCHEMICAL WASTEWATER TREATMENT METHOD OF COMPOUND CONTAINING NITROGEN**
UMKEHR-ELEKTRODIALYSE UND ELEKTROCHEMISCHES VERFAHREN ZUR BEHANDLUNG VON STICKSTOFFHALTIGE VERBINDUNGEN ENTHALTENDEM ABWASSER
PROCEDE DE TRAITEMENT DES EAUX USEES RENFERMANT UN COMPOSE CONTENANT DE L'AZOTE PAR TRAITEMENT ELECTROCHIMIQUE ET PAR INVERSION D'ELECTRODIALYSE

(30) Priority: 14.06.2005 KR 20050051140
(43) Date of publication of application: 27.02.2008
(73) Proprietor: Kepco Engineering & Construction Company, Inc., Giheung-gu Yongin-city Kyonggi do 449-713 (KR)
(72) Inventor: JOO, Hyo-Young, Yongin-city, Kyungki-do 449-915 (KR); KIM, Dae-Bog, Seongnam-city, Kyungki-do 461-800 (KR); JEONG, Yeon-Uk 111-102 Geumhwamaeul Daewoo Hyundai, Yongin-city, Kyungki-do 449-956 (KR); BYUN Dong-Hwa 301-405 Geumhwamaeul Jugong Greenvil, Yongin-city, Kyungki-do 449-958 (KR); KIM, Young-Gy, Seoul 138-160 (KR); MOON, Seung-Hyeon, Gwangju-city 500-480 (KR); YEON, Kyeong-Ho, Seoul 121-884 (KR)
(74) Representative: Hamer, Christopher K.
(86) International application number: PCT/KR2006/002260
(87) International publication number: WO 2006/135188

(56) References cited:
- WO-A1-96/14273
- GB-A- 2 249 785
- JP-A- 11 057 786
- KR-A- 20040 089 458
- KR-B1- 100 280 101
- KR-B1- 960 011 886
- US-A- 3 900 377
- US-A1- 2003 150 810

## Description

### Technical Field

The present invention relates to a method of treating wastewater, and more particularly, to a method of separating wastewater containing nitrogen compounds into product water and concentrated water by using electrodialysis reversal (EDR), for reusing the product water, and for treating the concentrated water to a degree of environmental regulation or less by electrochemical wastewater treatment (EWT) and discharging the water.

### Background Art

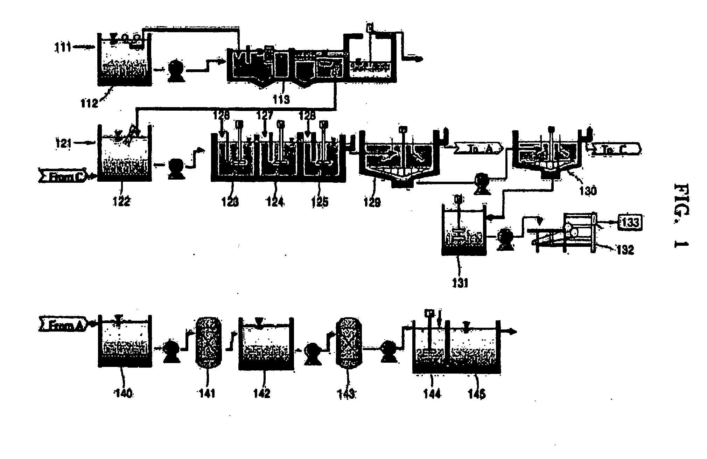

FIG. 1 is a schematic diagram for explaining a power plant chemical wastewater treatment process according to the prior art. Referring to FIG. 1, a wastewater treatment facility of a conventional power plant discharges wastewater after coagulation, precipitation, filtering, adsorption, and pH adjustment according to a water quality conservation act. The non-radioactive wastewater generated in a power plant is classified into oily wastewater 111 and chemical wastewater 121. Oily wastewater 111 is oil-containing wastewater including secondary system drainage, shaft sealing water, and cooling water. Chemical wastewater 121 consists of normal wastewater which consists of sludge generated from the secondary system devices, back washing suspended solids, and acid/alkaline wastewater, and abnormal wastewater which consists of acid/alkaline wastewater and suspended solids such as chemical cleaning water and start-up cleaning water generated during plant overhaul.

In a conventional wastewater treatment facility, chemical wastewater 121 and oily wastewater 111 which were passed through an oily wastewater pond 112 and an advanced oil separator 113 are flowed into a chemical wastewater pond 122. Wastewater of a chemical wastewater pond 122 is pH-adjusted in a first reaction tank 123 and is passed through a second reaction tank 124 and a coagulation tank 125. Acid-alkali materials 126 are injected into the first reaction tank 123. Coagulant alum or PAC 127 is injected into the second reaction tank 124 and a coagulant aid polymer 128 is injected into the coagulation tank 125. Flock which is formed while passing through the first and second reaction tanks 123 and 124 and the coagulation tank 125 is precipitated in a clarifier 129, and is entrusted-processed to a final cake 133 with a moisture content of less than 80±5% after passing through a thickener 130, a thickened sludge storage pond 131, and a dehydrator 132. Residual suspended solids and organic compounds of clarified water in the clarifier 129 are removed while passing through a clarified water pond 140, a pressure filter 141, a filtered water pond 142, and an activated carbon filter 143. The activated carbon-filtered water is pH-adjusted through a pH adjust pond 144 and is discharged finally through an effluent water pond 145 according to system design. Major functions of each unit process of a wastewater process facility are described in Table 1.

**[Table ]**

| Unit Process | Major Function | Comment |
|---|---|---|
| Chemical Wastewater Pond | Aeration, mixing, and stabilization of wastewater | Prevention of precipitation and corruption of wastewater |
| No. 1 Reaction Tank | pH adjustment | pH adjustment to an optimal condition of a coagulant (optimal condition of PAC or Alum at pH 5.5 to 6.3) |
| No. 2 Reaction Tank | Coagulant injection | Coagulant (alum or PAC) injection for removing suspended solids of colloidal state. |
| Coagulation Tank | Non-ionic polymer injection | Size enlargement of flock by using a coagulant aid polymer |
| Clarifier | Flock precipitation | Flock is precipitated. Precipitated sludge thereof is transferred to a thickener and upper state water is transferred to a pressure filter. |
| Thickener | Sludge coagulation | The precipitated sludge is thickened and transferred to a dehydrator. |
| Pressure Filter | Filtration | Suspended solids which are not precipitated in a clarifier are removed. |
| Activated Carbon Filter | Adsorption | An organic material, COD is removed. |
| pH Adjust Pond | pH adjustment | The final discharged water is discharged after pH-adjustment, if needed. |
| Dehydrator | Moisture content reduction of sludge | Cake is entrusted-processed after sludge dehydration. |

With a conventional wastewater treatment facility it is difficult to actively control the effluent water quality for water quality conservation act which is being strengthened stepwise from January 1, 2008 to January 1, 2013 as in Table 2. Particularly, ammonia was replaced by ethanolamine (ETA) as a pH adjusting agent of the secondary system in a nuclear power plant. It is difficult to satisfy the water quality of design criteria and related regulation under the conventional treatment process because of recalcitrant COD and T-N transformed from ETA. Therefore, an advanced process is needed in order to properly treat the recalcitrant COD and T-N.

**[Table 2]**

| Category | Effective period and water quality standard | | |
|---|---|---|---|
| | Until Dec. 31, 2007 | From Jan. 1, 2008 to Dec. 31, 2012 | After Jan.1, 2013 |
| Biochemical Oxygen Demand (BOD) (mg/L) | 30 or less | 20 or less | 10 or less |
| Chemical Oxygen Demand (COD)(mg/L) | 40 or less | 40 or less | 40 or less |
| Suspended Solids (SS)(mg/L) | 30 or less | 20 or less | 10 or less |
| Total Nitrogen (T-N)(mg/L) | 60 or less | 40 or less | 20 or less |
| Total Phosphorus (T-P)(mg/L) | 8 or less | 4 or less | 2 or less |
| Total E. coli (Total E.coli No./mL) | - | 3,000 or less | 3,000 or less |

The primary coolant heated in a nuclear reactor of a nuclear power plant is transferred to a steam generator and generates steam by heating the secondary coolant. The generated steam drives turbine generator and produces electricity. After that, the steam is condensed. The condensed secondary coolant is circulated to a steam generator. All kinds of ions and impurities in the condensed secondary coolant are removed by condensate polishing plant in order to prevent corrosion of a turbine, a steam generator, and related devices. ETA is accumulated in cation exchange resin of the condensate polishing plant and a large amount of the ETA is flowed into a wastewater treatment facility when regenerating the cation exchange resin. ETA reacts as in Formula 1 in water, and most of the ETA exists as a form of cation with a pH of 8 or less.

HOCH₂CH₂NH₂ + H₂O ⇔ HOCH₂CH₂NH₃⁺ +OH⁻ [Formula 1]

ETA, which is a nitrogen compound of inflow water of a wastewater treatment facility exists as a form of ions or complex salts and forms recalcitrant COD and T-N inducers. In particular, since a coagulation sedimentation device and a filtering device in a conventional wastewater treatment facility are basically designed for removal of suspended solids, they are not suitable for removing ionic matters. An adsorption process using activated carbon has an ETA removal ratio of just 7.2% according to the literature. Therefore, a complementary facility is required.

### Disclosure of Invention

The combination of electrodialysis and electrochemical treatment for treating contaminated water is known-see for example US 2003/0150810 A1. The present invention provides a wastewater treatment method which uses an electrodialysis reversal (EDR)-electrochemical wastewater treatment (EWT) mixing process, the method including: separating inflow wastewater which contains nitrogen compounds into product water and concentrated water using an EDR facility; and decomposing the concentrated water into target materials to be eliminated from the wastewater in an EWT facility wherein the EWT facility is a bipolar reactor, where in the EDR process is operated by phase reversal.

### Technical Solution

### Description of Drawings

The above and other features and advantages of the present invention will become more apparent by describing in detail exemplary embodiments thereof with reference to the attached drawings in which:
FIG. 1 is a schematic diagram for explaining a power plant chemical wastewater treatment process according to the prior art;
FIG. 2 is schematic diagram for explaining a chemical wastewater treatment process including electrodialysis reversal (EDR) and electrochemical wastewater treatment (EWT) according to the present invention;
FIGS. 3A through 3C are schematic diagrams for explaining EDR and EWT processes according to an embodiment of the present invention;
FIGS. 4A and 4B are diagrams illustrating movement of ions by EDR according to an embodiment of the present invention;
FIG. 5A is a graph illustrating TDS change of off-spec products according to time in case of simultaneously reversing an electrode and an effluent changeover valve;
FIG. 5B is a graph illustrating TDS change of off-spec products according to time in case of delaying reversal of an effluent changeover value after converting an electrode;
FIG. 6 is a schematic diagram of a bipolar reactor used in an EWT facility according to the present invention;
FIG. 7 is a graph illustrating a pH conditional TOC (ETA) removal ratio and an electric conduction removal ratio in an EDR facility according to an embodiment of the present invention;
FIG. 8A is a graph illustrating removal efficiency of nitrate nitrogen according to current density at a bipolar electrode reactor and a monopolar electrode reactor;
FIG. 8B is a graph illustrating removal efficiency of nitrate nitrogen according to power consumption of a bipolar electrode reactor and a monopolar electrode reactor;
FIG. 9 shows graphs illustrating water quality analysis results of EDR product water according to an embodiment of the present invention, including (a) suspended solids and turbidity, (b) conductivity, (c) T-N, (d) COD, (e) BOD, (f) cation, (g) anion, and (h) metal ion concentrations;
FIG. 10 shows graphs illustrating water quality analysis results of EDR concentrated water, including (a) suspended solids and turbidity, (b) conductivity, (c) T-N, (d) COD;
FIG. 11 shows graphs illustrating water quality analysis results of EWT influent, including (a) suspended solids and turbidity, (b) conductivity, (c) T-N, (d) COD; and
FIG. 12 are graphs illustrating water quality analysis results of EWT treatment water, including (a) suspended solids and turbidity, (b) conductivity, (c) T-N, (d) COD, (e) BOD, (f) cation, (g) anion, and (h) metal ion concentration.

### Mode for Invention

According to an embodiment of the present invention, influent may contain Chemical Oxygen Demand (COD) and Total Nitrogen (T-N) derived from ethanolamine (ETA).

An electrodialysis reversal (EDR) process may be performed in a pH range of 4 to 7.

The EDR process may include reusing product water discharged from an EDR facility as service water.

The EDR process is operated by phased reversal.

The EDR process may be operated by off-spec product recycle (OSPR).

The EDR facility may be equipped with a facility for controlling hydrogen ion concentration and/or concentrated water conductivity.

The EDR process may include inflowing concentrated water into the EWT facility after adding salts containing Cl or seawater.

A bipolar reactor is used as a reactor of the EWT facility.

An interval between electrodes in the bipolar reactor may be 10 to 30 mm.

A current density of the bipolar reactor may range from 40 to 80 mA/cm².

A facility for collecting gas generated in the reaction can be included.

The process may include pH-adjusting the EWT-treated water after the reaction is completed and then discharging the water as seawater. In addition, an activated carbon filter or a ceramic filter can be included in a backend of the electrochemical wastewater treatment (EWT) facility.

A facility circulating a part of the EWT-treated water to EDR can be included.

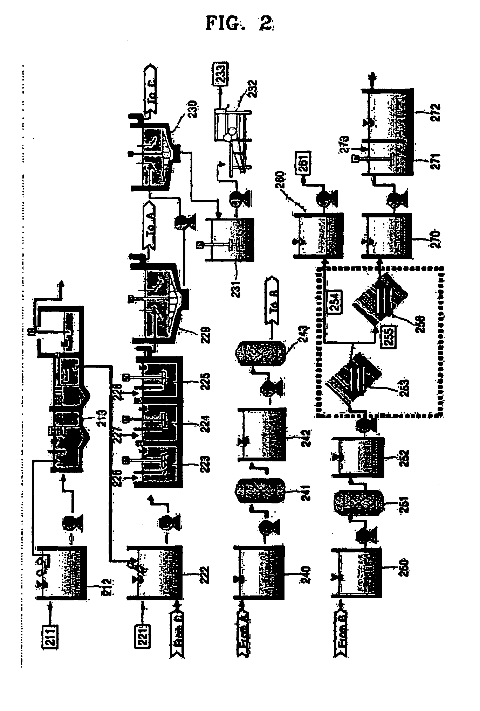

FIG. 2 is a schematic diagram for explaining a chemical wastewater treatment process including EDR and EWT processes according to the present invention. Referring to FIG. 2, in the current embodiment of the present invention, chemical wastewater 221 and oily wastewater 211 which was passed through an oily wastewater pond 212 and an advanced oil separator 213 are flowed into a chemical wastewater pond 222. Wastewater of the chemical wastewater pond 222 is pH-adjusted by adding acid-alkali materials 226 in a No. 1 reaction tank 223, and coagulant alum 227 and coagulant aid polymer 228 are injected in a No. 2 reaction tank 224 and a coagulation tank 225 for treatment. Flock which is formed while passing through the No. 1 reaction tank 223, the No. 2 reaction tank 224 and the coagulation tank 225 is precipitated in a clarifier 229, and is entrusted-processed to a final cake 233 with a moisture content of less than 80±5% after passing through a thickener 230, a thickened sludge storage pond 231, and a dehydrator 232. Residual suspended solids and organic compounds of clarified water in the clarifier 229 are removed while passing through a clarified water pond 240, a pressure filter 241, a filtered water pond 242, and an activated carbon filter 243. A reuse water pond 250 is set up in a backend of an activated carbon filter 243. Wastewater passed through the reuse water pond 250 passes through a prefilter 251 and a prefiltered water pond 252. A combined process of an EDR facility 253 and an EWT facility 256 is performed after that.

In a combined process of the present invention, the EDR facility 253 plays a role of separating wastewater into product water 254 and concentrated water 255. Product water 254 from the EDR facility 253 is re-used as raw water 261 after passing through a reclaimed water pond 260. Concentrated water 255 is flowed into the EWT facility 256 and treated therein. The EWT facility 256 plays a role of decomposing and treating concentrated recalcitrant COD and T-N using an electrochemical mechanism. In particular, by adopting a new process, the EWT facility 256 treats, in a stable and efficient way, recalcitrant COD and T-N generated by ETA used as a pH-adjusting agent. The water treated by the EWT facility 256 is finally pH-adjusted through a pH-adjust pond 271 after passing through a concentrated water pond 270 and is flowed out through an effluent water pond 272. Also, acid-alkali materials 273 may be added in the pH-adjust pond 271.

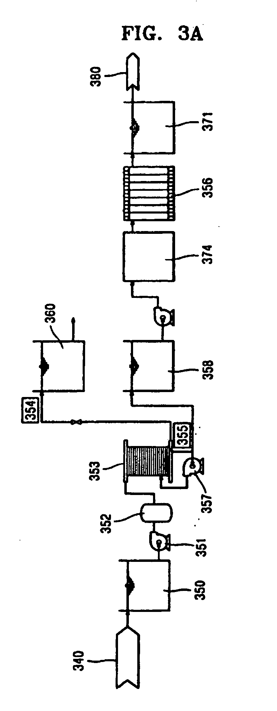

FIGS. 3A through 3C are schematic diagrams for explaining EDR and EWT processes according to the present invention.

Referring to FIG. 3A, wastewater 340 which passes through an EDR influx tank 350 goes through an EDR influx pump 351, a cartridge filter 352, and an EDR facility 353. Product water 354 is produced after being processed in the EDR 353 facility (the product water 354 passes through a reclaim water pond 360). Concentrated water 355 passes through a concentrated water pond 358 and an influx tank 374 and flows into an EWT facility 356. A part of the concentrated water 355 can circulate to the EDR facility 353 through the EDR concentrated water pump 357. The treated water which passes through the EWT facility 356 flows out to a pH-adjusting pond 371 and is discharged as indicated by reference numeral 380.

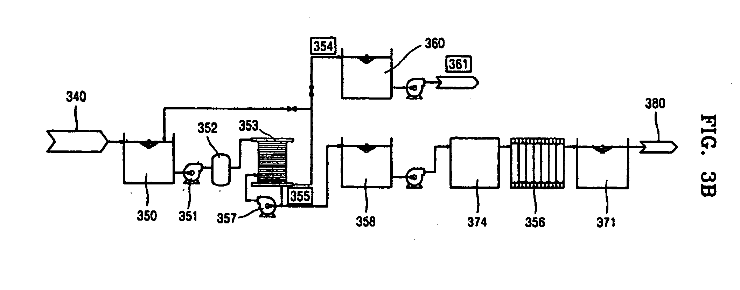

Referring to FIG. 3B, the product water 354 processed in the EDR facility 353 is re-used as raw water 361 after passing through a reclaimed water pond 360. FIG. 3B illustrates processes including a phased reversal process and circulating an off-spec product.

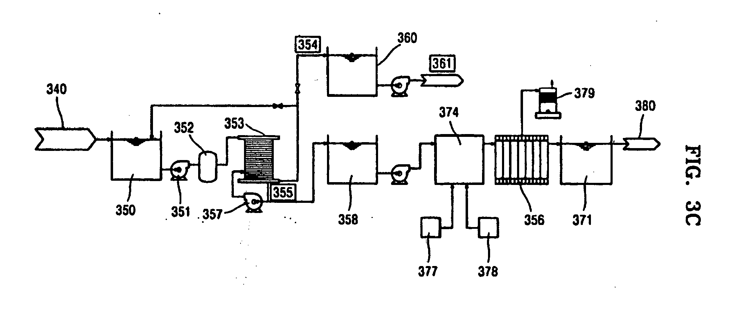

FIG. 3C illustrates a supporting electrolyte injection device 377, a pH control device 378, and a gas collector 379.

The details of an EDR facility according to an embodiment of the present invention are as follows:

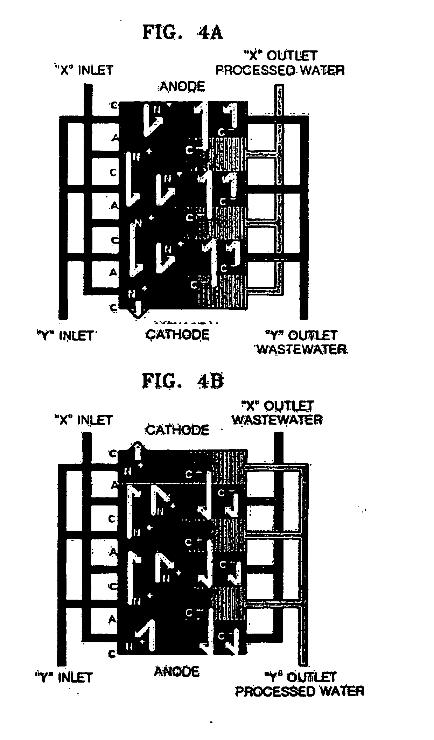

In the present invention, a membrane separation process is introduced in order to concentrate elimination target materials of wastewater. An EDR facility is adopted for minimizing fouling necessarily generated in a membrane separation process. An EDR system controls scales, which are formed in membrane surfaces, by periodically changing the polarity of electrodes during an operation to reverse a traveling direction of ions in a membrane stack. FIGS. 4A and 4B show the basic principle of the EDR system. When the polarity is reversed, a dilution room is converted to a concentration room, and a concentration room is converted to a dilution room. This makes scales generated on a membrane surface or precipitate of salts to be backwashed.

If an electrode of EDR is reversed, an existing concentration room is converted to a dilution room. Therefore, if an electrode is reversed, product water having high salt density is discharged in a dilution room for a certain time. The product water having high salt concentration is called an off-spec product. The time required to produce an off-spec product corresponds to hydraulic retention time for inflow water from entering to an EDR facility to discharging. Therefore, as there are more hydraulic steps in an EDR facility, the time required for generating an off-spec product increases.

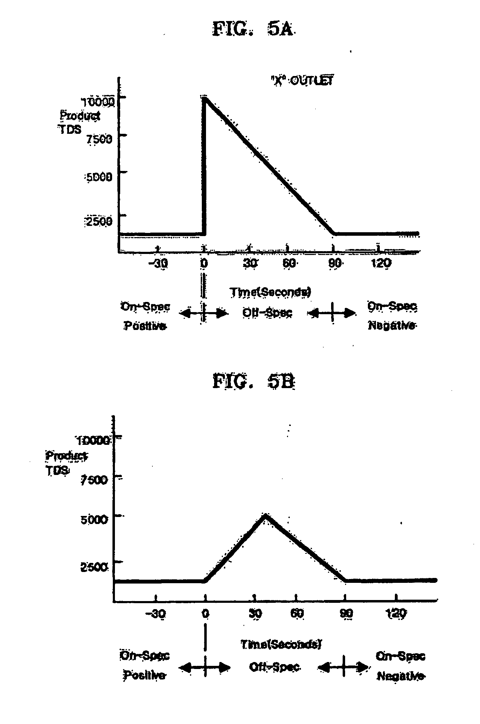

In case of having three steps of which each hydraulic stage time is 30 seconds, if the polarity of all changeover values and stacks are changed at the same time, the salt concentration gradient of effluent is as in FIG. 5A. Therefore, effluent discharged for 90 seconds is altogether processed as wastewater. However, in case of delaying reversion time of effluent changeover valves in comparison with the time while polarity of an electrode is changed, average salinity of off-spec products can be dropped down to a lower level than salinity of inflow water as in FIG. 5B. As described above, processing stepwise reversion of electrodes and effluent changeover values is called phased reversal. An operation result of utilizing phased reversal according to the invention compared to a basic operation is shown in Table 3.

If salinity of an off-spec product equals to or is lower than concentration of inflow water, the off-spec product can be re-circulated and processed again as inflow water of an EDR facility; this is called off-spec product recycle (OSPR.) Recovery rate of an EDR facility is increased by around 8 % compared to basic operation when off-spec products are re-circulated and processed again with phased reversal. The result is shown in Table 3.

**[Table 3]**

| Category | Basic Operation | Phased Reversal | Phased Reversal and OSPR |
|---|---|---|---|
| Gross Product | 333,333 / 1,262 | 333,333 / 1,262 | 333,333 / 1,262 |
| Off-Spec Product | 33,333 / 126,2 | 11,111 / 42,1 | 11,111 / 42,1 |
| Net Product | 300,000 / 1,135 | 322,222 / 1,219 | 322,222 / 1,219 |
| Electrode Waste | 3,000 / 11,4 | 3,000 / 11,4 | 3,000 / 11,4 |
| Concentrate Blowdown (to waste) | 72,000 / 272,6 | 72,000 / 272,6 | 72,000 / 272,6 |
| Off-Spec Product (to waste) | 33,333 / 126,2 | 11,111 / 42,1 | - |
| Total Waste | 108,333 / 410,1 | 86,111 / 325,9 | 75,000 / 283,9 |
| Total System Feed | 408,333 / 1,545.7 | 409,333 / 1,549.5 | 397,222 / 1,503.6 |
| Recovery (%) | 73.5 | 78.7 | 81.2 |

| | | | |
|---|---|---|---|
| (US Gallon/Day/m³/Day) | | | |

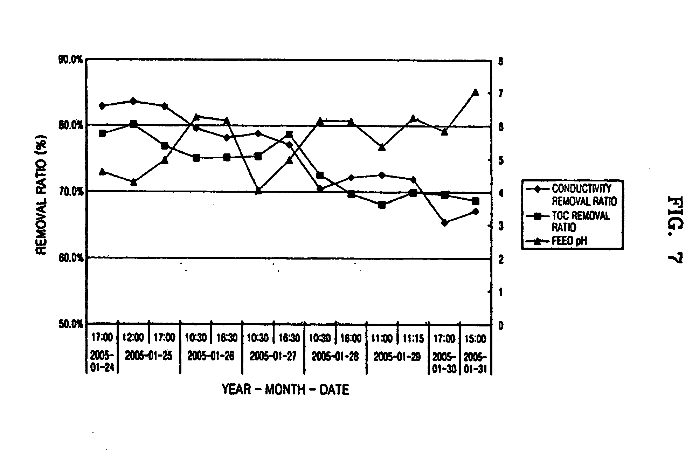

An EDR process may be performed in a pH range of 4 to 7 according to an embodiment of the present invention. In the EDR process, in order to separate ETA complex salt to concentrated water, it is important that ETA complex salt exists as a form of an ion. Therefore, an experimental result of removal ratio of TOC and conductivity under various pH ranges is as in FIG. 7. An experiment was performed in a pH range of 4 to 7 and ETA measurement was determined indirectly through TOC analysis. Theoretically, ETA exists as a form of an ion in a pH of 8 or less. It was confirmed that removal ratio increases as pH is low, because the portion of ETA in an ionic state greatly increases as the pH decreases. Therefore, a facility for maintaining concentration of hydrogen ions in EDR influent can be installed in order to maintain a fixed pH.

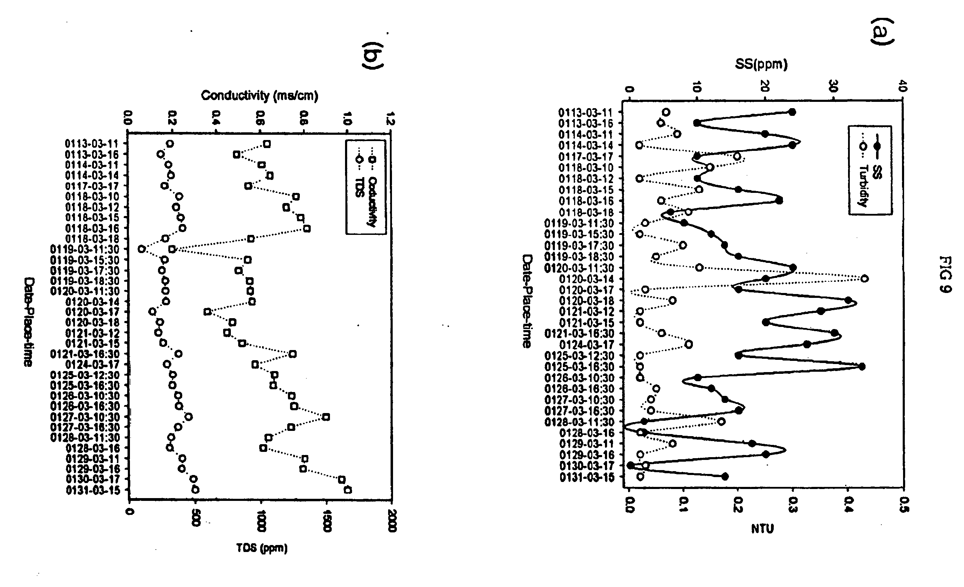

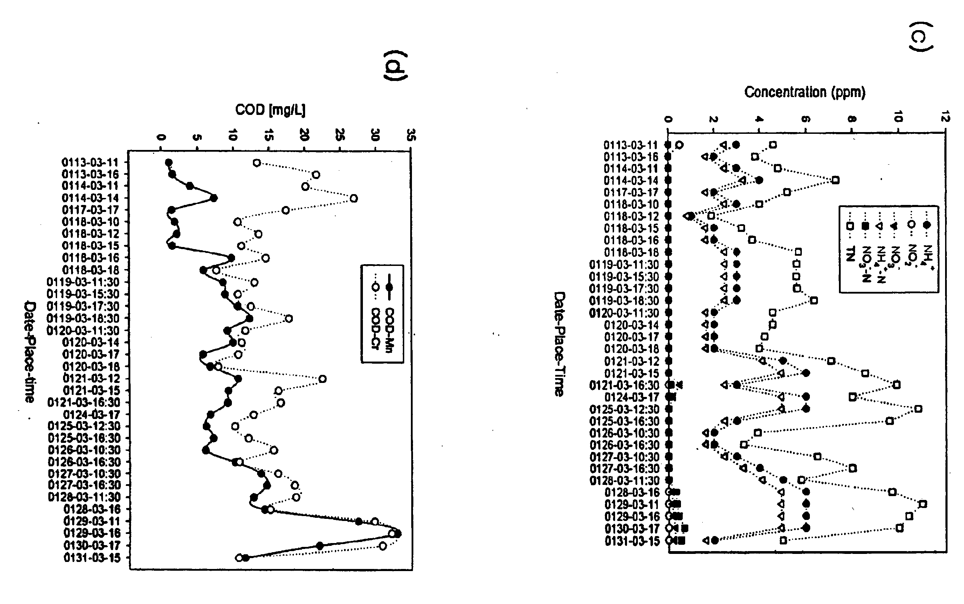

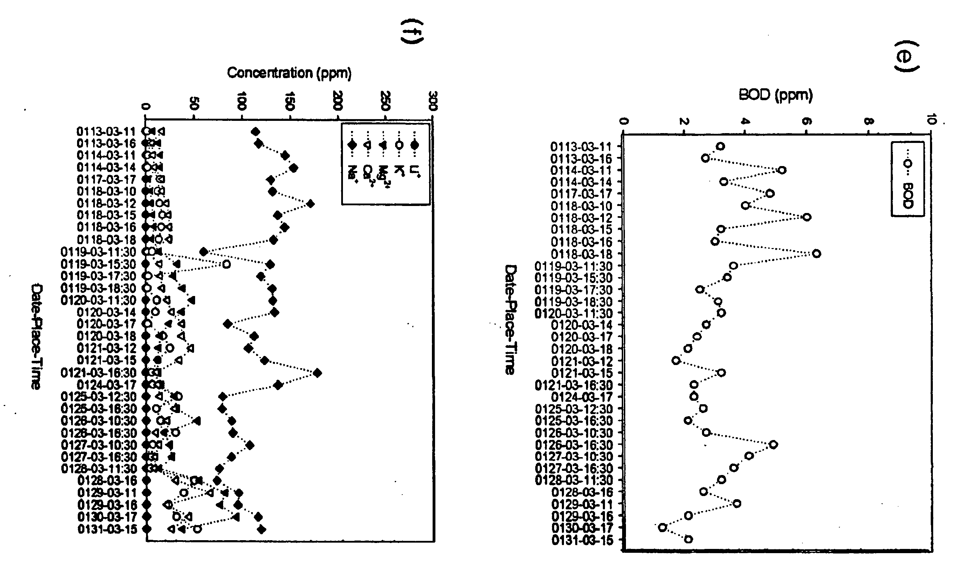

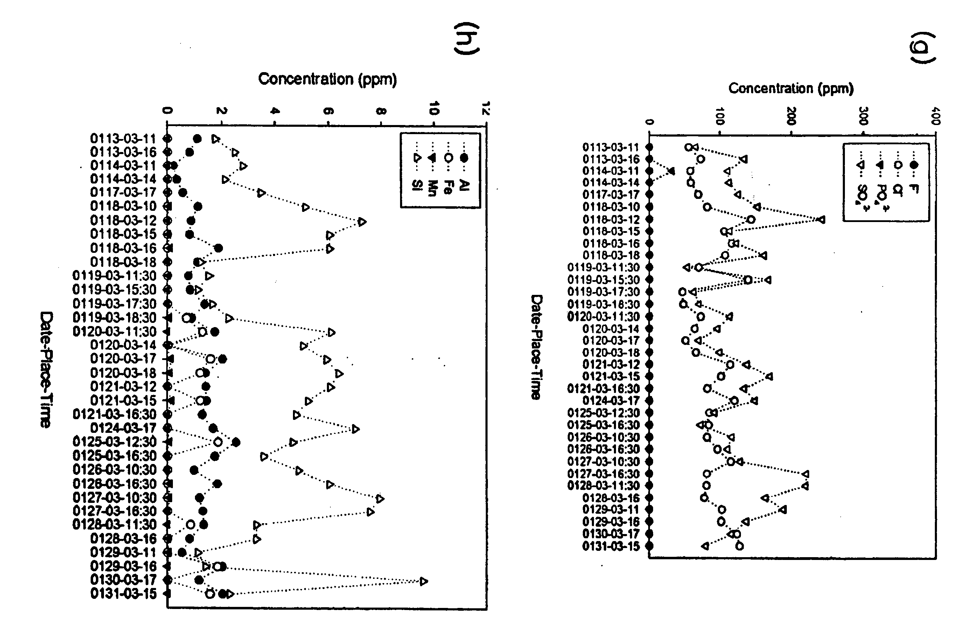

FIGS. 9 through 12 are graphs illustrating water quality analysis results according to time from Jan. 13, 2005 to Jan. 31, 2005 of EDR product water, EDR concentrated water, EWT inflow water, and EWT-treated water according to embodiments of the present invention.

FIG. 9 shows graphs illustrating water quality analysis results of EDR product water according to an embodiment of the present invention including (a) suspended solids and turbidity, (b) conductivity, (c) T-N, (d) COD, (e) BOD, (f) cation, (g) anion, and (h) metal ion concentration. The water quality analysis result of EDR product water generally satisfies requirements. Also, since concentrations of sodium ions, sulfuric acid ions, chlorine ions, and silicon ions are very low, the water can be re-used as raw water.

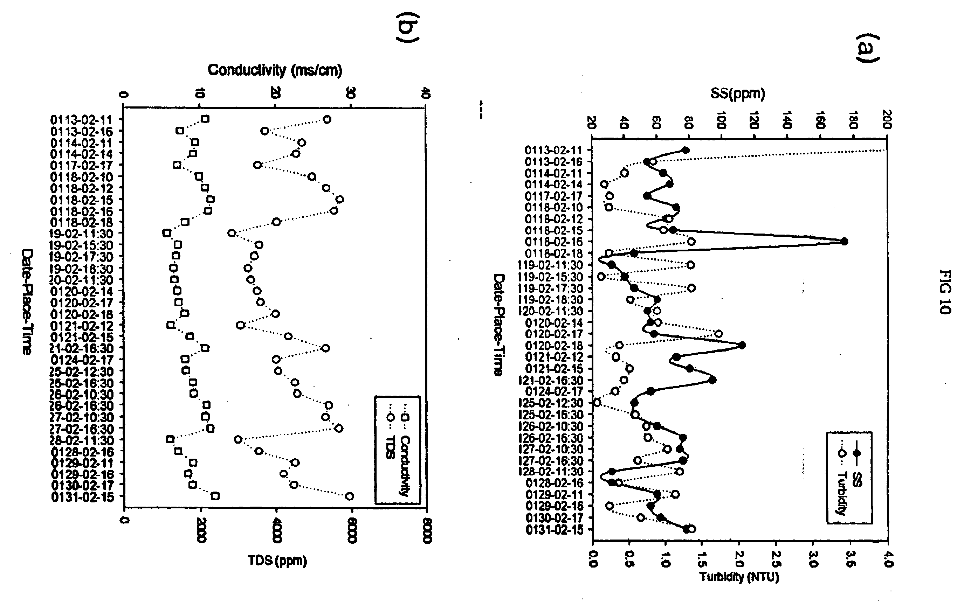

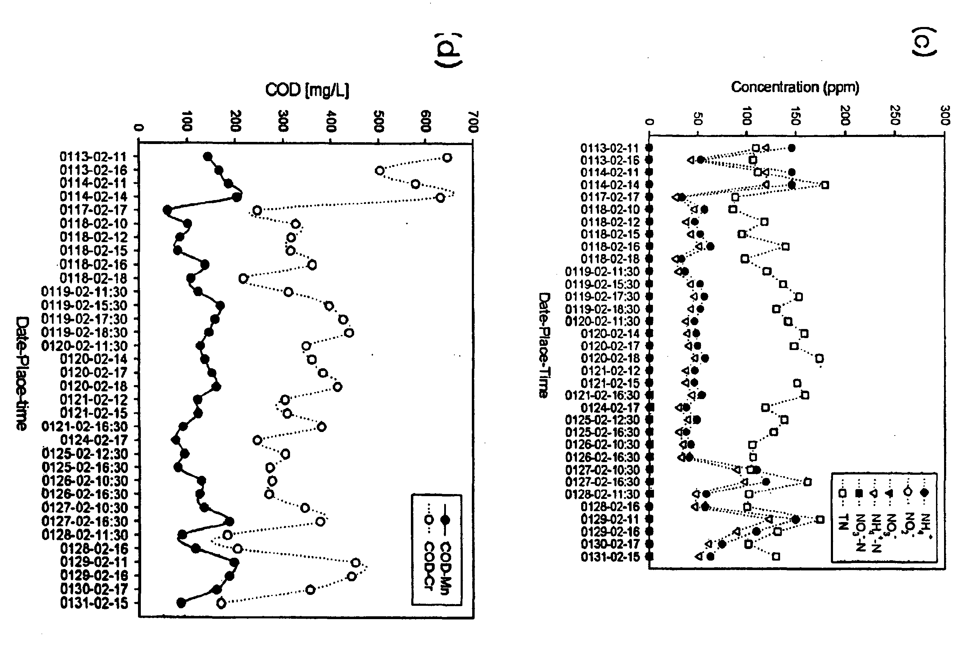

FIG. 10 shows graphs illustrating water quality analysis results of EDR concentrated water according to an embodiment of the present invention including (a) suspended solids and turbidity, (b) conductivity, (c) T-N, and (d) COD. T-N and COD which are elimination targets were enriched respectively 3 to 5 times and 2 to 4 times, compared to inflow water.

Details of an EWT facility according to an embodiment of the present invention are as follows:

An EWT facility used in the present invention removes COD and T-N in wastewater by converting them to carbon dioxide, water, nitrogen gas, etc. through an electrochemical redox reaction, by using an insoluble catalyst electrode as an anode and an optional catalyst electrode as a cathode.

An EWT facility of the present invention is comprised of a rectifier supplying DC power, a reactor where electrolysis reaction actually occurs, a propriety tank which controls conductivity and pH suitable for electrolysis. Besides, all kinds of measuring tools for smooth operation of an electrochemical wastewater treatment facility and a gas collector can be included.

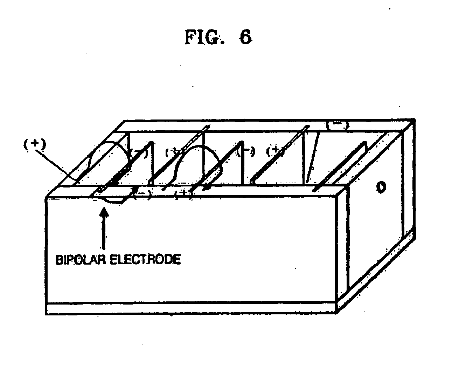

In the present invention, an EWT facility having a bipolar electrode reactor not a unipolar electrode reactor was used, as shown in FIG. 6. A bipolar reactor has excellent current efficiency because there is no need to separately connect an electrode in the bipolar reactor and because there is no electric current loss in an edge of an electrode. Moreover, a bipolar reactor has excellent reactivity because redox reaction simultaneously occurs in a single electrode, and thus electrons actively move.

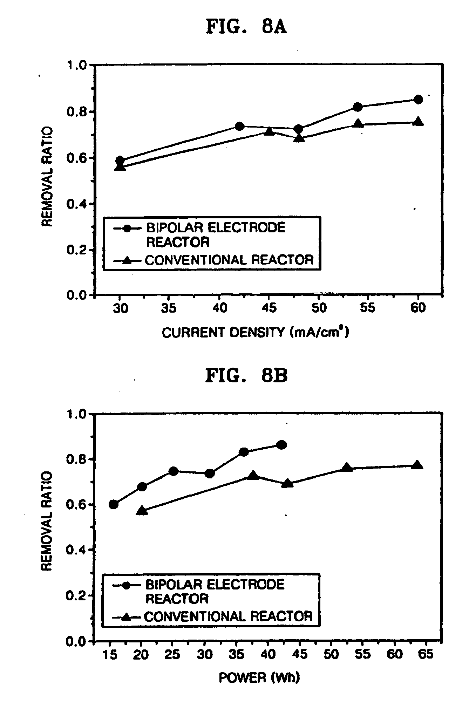

FIGS. 8A and 8B are graphs illustrating experiment results comparing nitrate nitrogen removal efficiency of a bipolar reactor and a unipolar reactor. Initial concentration of nitrate nitrogen of a sample used for an experiment was 230 ppm. The electrode area thereof was 231cm² and the reaction dose thereof was 0.5L. An experimental result using various current densities is shown in FIG. 8A. The bipolar reactor was more efficient than the unipolar reactor, and the removal ratio difference of the two reactors increased as current density increased. The decomposition rate according to power consumption is shown in FIG. 8B, and the removal efficiency of the bipolar reactor was 10 % higher than under the same power condition.

The electrode area and electrode number can be changed according to needs in composition of a reactor. An electrode spacing can be controlled in a range of 10 to 30 mm. A current density in the bipolar reactor may range from 40 to 80 mA / cm². Moreover, the product water was set up to take turns to flow to right and left in order to improve decomposition reaction of effluent in electrolysis.

In a cathode (-) of an EWT device, nitrate nitrogen (NO₃) is reduced to ammoniacal nitrogen (NH₄⁺), and the reduced ammoniacal nitrogen is oxidized to nitrogen gas and emitted to the air near an anode (+). In a cathode, nitrate nitrogen and nitrite nitrogen are reduced to ammoniacal nitrogen or nitrogen gas by Formulas 2 through 6. However, if product water is neutral or alkaline, a reaction by Formula 2 is dominant, and if product water is acid, a reaction by Formula 3 is dominant.

NO₃⁻ + 6H₂O + 8e⁻ ⇒ NH₃ + 9OH⁻ [Formula 2]

NO₃⁻ + 4H+ + 8e⁻ ⇒ NH₄+ + 3H₂O [Formula 3]

NO₃⁻ + 3H₂O + 5e⁻ ⇒ 1/2 N₂(g) + 6OH⁻ [Formula 4]

NO₂⁻ + 5H₂O + 6e⁻ ⇒ NH₃ + 7OH⁻ [Formula 5]

NO₂⁻ + 2H₂O + 3e⁻ ⇒ 1/2 N₂(g) + 4OH⁻ [Formula 6]

In an anode, an oxidation reaction may occur and nitrite nitrogen is transformed to nitrate nitrogen as in Formula 8, but mostly ammoniacal nitrogen is transformed to nitrogen gas by Formula 7 and then emitted to the air. Moreover, in an anode, hypochlorous acid is generated from a chlorine ion by an oxidation reaction. The hypochlorous acid, which is a powerful oxidizer, oxidizes ammoniacal nitrogen to nitrogen gas.

2NH₃ + 6OH⁻ ⇒ N₂ + 6H₂O + 6e⁻ [Formula 7]

NO₂ + 2OH⁻ ⇒ NO₃⁻ + H₂O + 6e⁻ [Formula 8]

2Cl⁻ ⇒ Cl₂ +2e⁻ [Formula 9]

Cl₂ + H₂O ⇒ 2H⁺ + Cl⁻ + OCl⁻ [Formula 10]

NO₂⁻ + OCl⁻ ⇒ NO₃⁻ + Cl⁻ [Formula 11]

2NH₃ + 3OCl⁻ ⇒ N₂ + 3Cl⁻ + 3H₂O [Formula 12]

An EWT facility according to an embodiment of the present invention is focused on removing not only simple nitrate nitrogen but also ETA which is an inducer of a recalcitrant organic material, T-N. A decomposition reaction of ETA occurring in a bipolar reactor is as follows:

NH₂CH₂CH₂OH + H₂O ⇒ NH₃ + 2HCHO + 2H⁺ + 2e⁻ [Formula 13]

NH₃ + 3OH⁻ ⇒ 0.5N₂ + 3H₂O + 3e⁻ [Formula 14]

2NH₃ + 2OCl⁻ ⇒ N₂ + 2HCl + 2H₂O [Formula 15]

HCHO + 4OH⁻ ⇒ CO₂ + 3H₂O + 4e⁻ [Formula 16]

HCHO + 20Cl⁻ ⇒ CO₂ + 2Cl⁻ + H₂O [Formula 17]

Ammoniacal nitrogen and a part of an ETA-inducing component are decomposed by an oxidation reaction of hypochlorous acid in Formulas 12, 15, and 17. Moreover, hypochlorous acid which is a powerful oxidizer is known to be efficient in decomposition of not only a nitrogen component but also all kinds of organic materials. Hypochlorous acid is generated from chlorine ions existing in concentrated water in an anode of an EWT reactor, by Formula 10. Therefore, concentrated water has to contain chlorine ions in order to efficiently perform simultaneous removal of COD and T-N by using an EWT facility, and additional injection is needed in case of unsatisfying proper chlorine ion concentration. Therefore, in a reservoir before flowing in, salts such as NaCl, KCl, and CaCl₂ are added or seawater is adulterated.

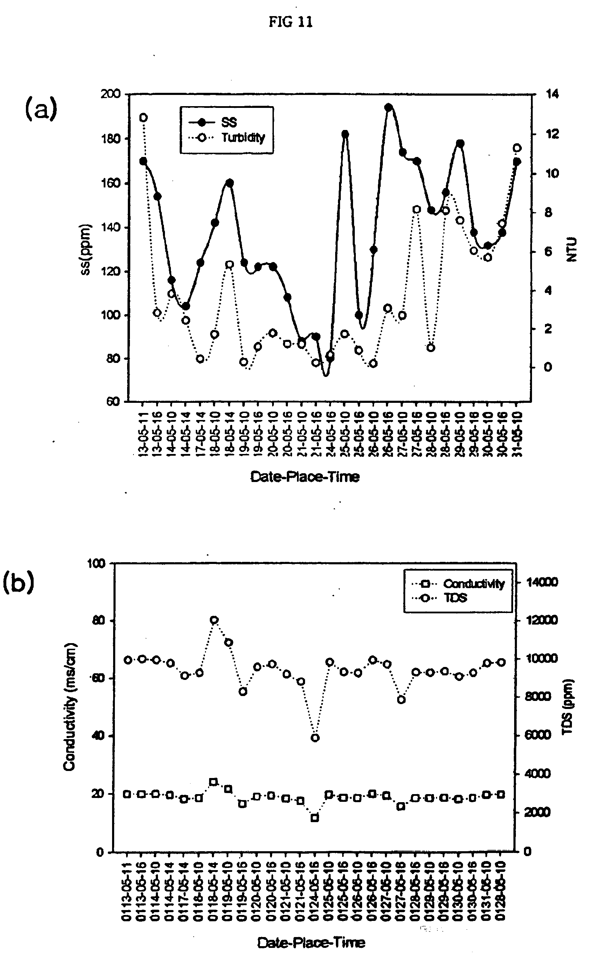

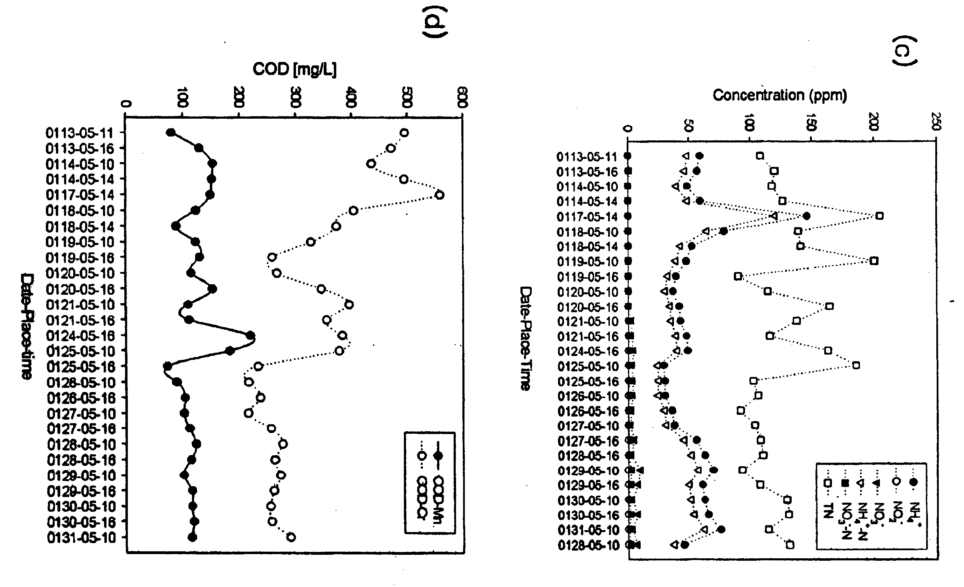

FIG. 11 shows graphs illustrating water quality analysis results of EWT influent including, (a) suspended solids and turbidity, (b) conductivity, (c) T-N, and (d) COD.

| Operational records of EDR | | Operational records of EWT | |
|---|---|---|---|
| EDR Stage I Volt-age (V) | 60 | EWT Current Density (mA/cm²) | 70 |
| EDR Stage I Current (A) | 6.64 | EWT Current (A) | 126 |
| EDR Stage II Voltage (V) | 60 | EWT Inflow Water Flux (ℓ/min) | 5 |
| EDR Stage II Current (A) | 3.21 | EWT-Treated water Flux (ℓ/min) | 5 |
| EDR Product water Flux (ℓ/min) | 13.5 | EWT Inflow Water Conductivity (mS/cm) | 18.54 |
| EDR Concentrated Water Flux (ℓ/min) | 2.8 | EWT-Treated Water Conductivity (mS/cm) | 18.65 |
| EDR Inflow Water Conductivity (mS/cm) | 2.42 | EWT Inflow Water pH | 10.04 |
| EDR Concentrated Water Conductivity (mS/cm) | 9.92 | EWT-Treated Water pH | 8.99 |
| EDR Product water Conductivity (mS/cm) | 0.76 | EWT-Treated Water Temperature (°C) | 36 |
| EDR Inflow Water pH | 7.51 | | |
| EDR Concentrated Water pH | 7.09 | | |
| EDR Product water pH | 7.01 | | |
| EDR Inflow Water Temperature (°C) | 14 | | |

**[Table 5]**

| | | | | | |
|---|---|---|---|---|---|
| Category | EDR Inflow | EDR Con- | EDR Product | EWT Inflow | EWT-Treate |

The results show stable conductivity compared to the analysis result of EDR concentrated water because a certain amount of salts was added in a reservoir.

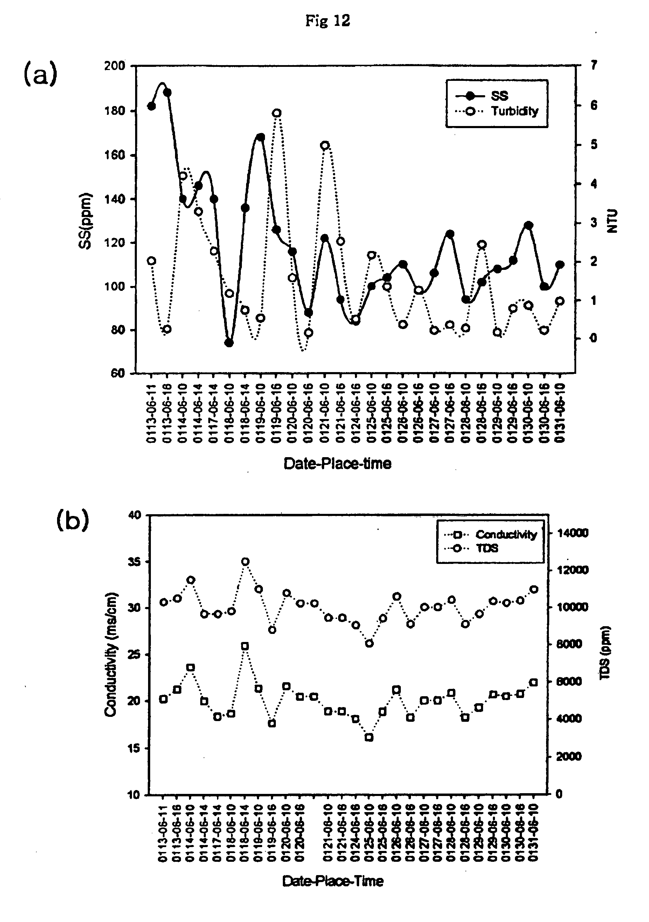

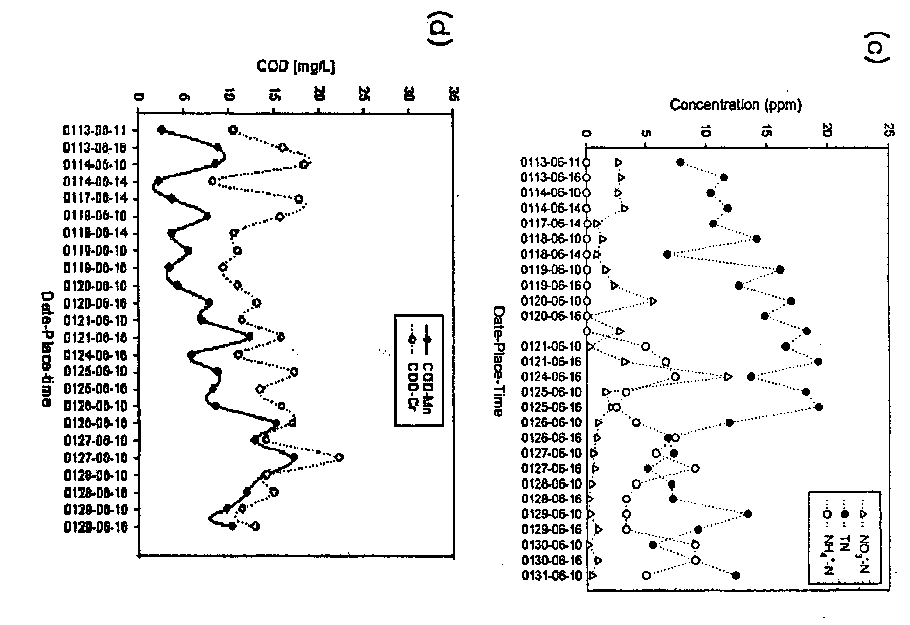

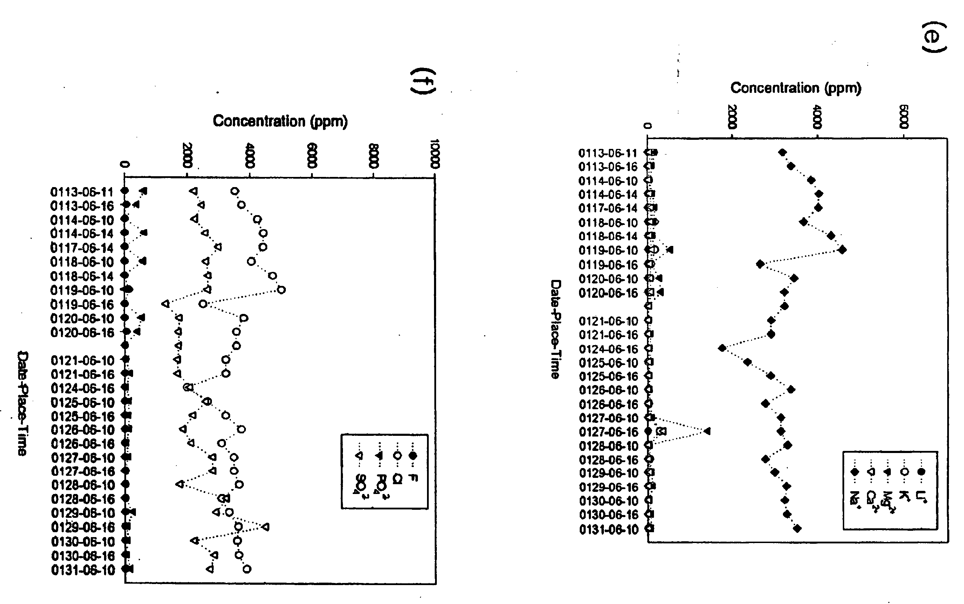

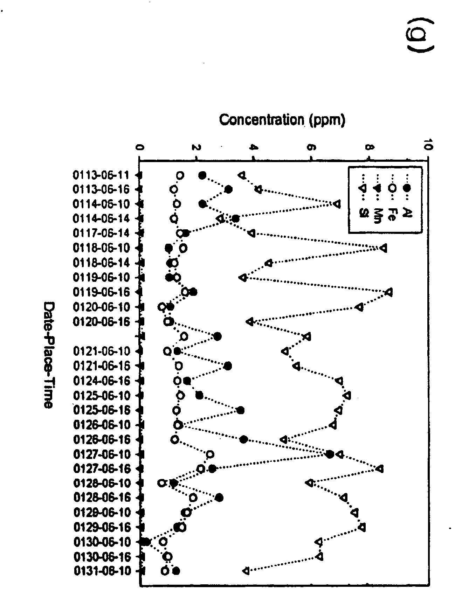

FIG. 12 are graphs illustrating water quality analysis results of EWT-treated water including, (a) suspended solids and turbidity, (b) conductivity, (c) T-N, (d) COD, (e) BOD, (f) cation, (g) anion, and (h) metal ion concentration product water. It was confirmed that COD and T-N can be processed to a degree of 20 mg/L or less, which is the designed value.

It can be included adjusting pH of product water and discharging the water after the reaction above is completed.

Since a part of ammoniacal nitrogen or organic compounds are decomposed by hypochlorous acid, a halogenated compound such as trihalomethane (THM) can be generated. Therefore, in order to remove halogenated compounds and suspended solids of EWT-treated water, the EWT-treated water can be post-treated by installing an activated carbon filter or a ceramic filter in the backend of EDR-EWT facilities and then flowing the effluent out.

According to an embodiment of the present invention, a device is provided for re-circulating a part of EWT-treated water to flow into an EDR facility. EWT-treated water can be discharged through pH-adjusting and/or after post-treatment by a filter. In addition, the EWT-treated water can be more perfectly treated by re-circulating a part of the water.

Since an EWT facility, according to an embodiment of the present invention, has excellent simultaneous removal rates of COD and T-N and the concentrated water of an EDR facility is used as inflow water, stability and profitability is increased. This is because extra expense is decreased by reducing the amount of inflow water to about 10%. However, when there is no need to re-use wastewater and when the concentration of inflow wastewater is high enough to process only the EWT facility can be operated without the EDR facility.

Operation conditions of EDR-EWT combined process according to the present invention are shown in Table 4. A water quality analysis result of a sample during operation is shown in Table 5. Water quality of EDR-concentrated water was measured by taking a sample from a pipe of EDR-concentrated water. The sample of EDR-concentrated water was taken from a tank of two tons or more in order to minimize variations in characteristics of the EDR-concentrated water. Water quality of product water was measured by taking a sample from product water. The sample of EWT inflow water was taken from a tank in which the pH and conductivity at a head area of a bipolar reactor are controlled. The sample of EWT-treated water shows was taken at a final spot at which the EWT-treated water is discharged.

**[Table 4]**

| | Water | centrated Water | Water | Water | d Water |
|---|---|---|---|---|---|
| Turbidity | 0.57 | 1.06 | 0.02 | 5.33 | 0.74 |
| Mn | 0.08 | 0.39 | 0.00 | 0.09 | 0.02 |
| PH | 7.51 | 7.09 | 7.01 | 10.04 | 8.99 |
| Conductivity | 2.42 | 9.92 | 0.76 | 18.54 | 18.65 |
| SS | 38.0 | 66.0 | 10.0 | 160.0 | 136.0 |
| COD_{Mn} | 17.71 | 84.23 | 2.12 | 87.72 | 3.62 |
| Ca²⁺ | 52.61 | 134.80 | 21.45 | 82.75 | 78.90 |
| Mg²⁺ | 51.49 | 252.90 | 18.01 | 156.38 | 135.10 |
| Fe²⁺ | 0.00 | 0.00 | 0.00 | 0.00 | 0.00 |
| Al²⁺ | 1.04 | 2.64 | 0.44 | 2.04 | 2.03 |
| Na⁺ | 577.59 | 2362.55 | 131.56 | 3418.67 | 3678.11 |
| K⁺ | 12.63 | 47.61 | 4.07 | 45.49 | 44.02 |
| NH₄ ⁺ | 2.47 | 126.22 | 0.00 | 71.75 | 0.00 |
| Cl⁻ | 345.89 | 2154.17 | 82.24 | 3940.98 | 3874.08 |
| SO₄²⁻ | 363.37 | 3698.29 | 152.78 | 2561.39 | 2599.46 |
| NO₃⁻ | 0.00 | 0.00 | 0.00 | 0.00 | 0.00 |
| SiO₂ | 4.26 | 8.82 | 2.27 | 3.03 | 8.51 |
| TDS | 1210 | 4460 | 380 | 9270 | 9325 |
| Total Nitrogen (T-N) | 20.12 | 118.22 | 1.91 | 141.02 | 6.81 |
| BOD | 7.00 | - | 6.00 | - | - |
| Temperature (°C) | 14.0 | - | - | - | 36.0 |

The 2.1 mg/L of COD concentration in EDR product water is proper for not only raw water but also service water, and 6.8 mg/L of T-N concentration satisfies 20 mg/L of the designed degree. Moreover, it can be checked that other heavy metal ions show proper water quality which can be used as service water.

While the present invention has been particularly shown and described with reference to exemplary embodiments thereof, it will be understood by those of ordinary skill in the art that various changes in form and details may be made therein without departing from the and scope of the present invention as defined by the following claims.

## Claims

1. A method of treating wastewater using an electrodialysis reversal (EDR)-electrochemical wastewater treatment (EWT) combined process, comprising:
separating inflow wastewater which contains nitrogen compounds into product water and concentrated water using an EDR facility; and
decomposing the concentrated water into target materials to be eliminated from the wastewater in an EWT facility, wherein the EWT facility is a bipolar reactor, wherein the EDR process is operated by phased reversal.

2. The method of claim 1, wherein the inflow water contains COD and T-N derived from ethanolamine (ETA).

3. The method of claim 1, wherein the EDR process is performed in a pH range of 4 to 7.

4. The method of claim 1, comprising reusing product water as service water from the EDR facility.

5. The method of claim 1, wherein the EDR process is operated by off-spec product recycle (OSPR).

6. The method of claim 1, wherein the EDR facility is further equipped with a facility to control pH.

7. The method of claim 1, wherein the EDR facility is further equipped with a facility to control conductivity of concentrated water.

8. The method of claim 1, further comprising adding salts containing Cl or seawater to the concentrated water from the EDR facility and then flowing the concentrated water into the EWT facility.

9. The method of claim 1, wherein an electrode spacing of the bipolar reactor ranges from 10 to 30 mm.

10. The method of claim 1, wherein a current density of the bipolar reactor ranges from 40 to 80 mA/cm².

11. The method of claim 1, further comprising using a facility to collect or treat gas generated during reaction.

12. The method of claim 1, further comprising pH-adjusting the EWT-treated water when reaction is completed, and discharging the EWT-treated water.

13. The method of claim 1, wherein the backend of the EWT facility further includes an activated carbon filter or a ceramic filter.

14. The method of claim 1, further comprising using a facility to circulate a part of EWT-treated water and to reflow the part of the EWT-treated water into EDR facility.

## Patentansprüche

1. Verfahren zur Behandlung von Abwasser mit Hilfe einer Kombination aus Umkehr-Elektrodialyse (UED) und elektrochemischer Abwasserbehandlung (EAB), wobei das Verfahren Folgendes umfasst:
Trennen von Zuflussabwasser, das Stickstoffverbindungen enthält, in Produktwasser und konzentriertes Wasser unter Verwendung einer UED-Anlage und
Aufschließen des konzentrierten Wassers in Zielmaterialien, die aus dem Abwasser in einer EAB-Anlage beseitigt werden müssen, wobei die EAB-Anlage ein bipolarer Reaktor ist und das UED-Verfahren durch eine schrittweise Umkehr betrieben wird.

2. Verfahren nach Anspruch 1, wobei das Zuflusswasser COD und T-N enthält, das von Ethanolamin (ETA) abgeleitet wird.

3. Verfahren nach Anspruch 1, wobei das UED-Verfahren in einem pH-Bereich von 4 bis 7 durchgeführt wird.

4. Verfahren nach Anspruch 1, das die Wiederverwendung von Produktwasser als Brauchwasser aus der UED-Anlage umfasst.

5. Verfahren nach Anspruch 1, wobei das UED-Verfahren durch ein nicht der Spezifikation entsprechendes Produkt-Recycling (Off-Spec-Product Recycle - OSPR) betrieben wird.

6. Verfahren nach Anspruch 1, wobei die UED-Anlage ferner mit einer Vorrichtung zur pH-Steuerung ausgestattet ist.

7. Verfahren nach Anspruch 1, wobei die UED-Anlage ferner mit einer Vorrichtung zur Steuerung der Leitfähigkeit von konzentriertem Wasser ausgestattet ist.

8. Verfahren nach Anspruch 1, das ferner Folgendes umfasst: Zugabe von Salzen, die Cl oder Meerwasser enthalten, zu dem konzentrierten Wasser aus der UED-Anlage und daraufhin Leiten des konzentrierten Wassers in die EAB-Anlage.

9. Verfahren nach Anspruch 1, wobei ein Elektrodenabstand des bipolaren Reaktors von 10 bis 30 mm reicht.

10. Verfahren nach Anspruch 1, wobei eine Stromdichte des bipolaren Reaktors von 40 bis 80 mA/cm² reicht.

11. Verfahren nach Anspruch 1, das ferner die Verwendung einer Vorrichtung zur Sammlung oder Behandlung von Gas umfasst, das während der Reaktion erzeugt wird.

12. Verfahren nach Anspruch 1, das ferner die pH-Einstellung des mit EAB behandelten Wassers umfasst, wenn die Reaktion abgeschlossen ist, und Ablassen des mit EAB behandelten Wassers.

13. Verfahren nach Anspruch 1, wobei die Hintergrundeinrichtungen der EAB-Anlage ferner ein Aktivkohlefilter oder ein Keramikfilter umfassen.

14. Verfahren nach Anspruch 1, das ferner die Verwendung einer Vorrichtung zum Zirkulieren einer Wanne mit EAB behandeltem Wasser und zum Rückleiten des Teils des mit EAB behandelten Wassers in UED-Anlage umfasst.

## Revendications

1. Procédé de traitement des eaux usées utilisant un procédé mixte d'inversion d'électrodialyse (EDR) et de traitement électrochimique des eaux usées (EWT), consistant à :
séparer les eaux usées d'arrivée, qui contiennent des composés azotés, pour produire de l'eau de production et de l'eau concentrée en utilisant une installation EDR ; et
décomposer l'eau concentrée pour produire des matières cibles à éliminer des eaux usées dans une installation EWT, l'installation EWT étant un réacteur bipolaire, le procédé EDR étant mis en oeuvre par inversion en plusieurs phases.

2. Procédé selon la revendication 1, dans lequel les eaux d'arrivée ont une DCO et une teneur en azote total provenant d'éthanolamine (ETA).

3. Procédé selon la revendication 1, dans lequel le procédé EDR est exécuté dans une plage de pH de 4 à 7.

4. Procédé selon la revendication 1, comprenant une réutilisation de l'eau de production sous forme d'eau de service provenant de l'installation EDR.

5. Procédé selon la revendication 1, dans lequel le procédé EDR est exécuté en utilisant un recyclage de produit hors spécifications (OSPR).

6. Procédé selon la revendication 1, dans lequel l'installation EDR est équipée en outre d'une installation de contrôle de pH.

7. Procédé selon la revendication 1, dans lequel l'installation EDR est équipée en outre d'une installation de contrôle de la conductivité de l'eau concentrée.

8. Procédé selon la revendication 1, consistant en outre à ajouter des sels contenant du chlore ou de l'eau de mer à l'eau concentrée provenant de l'installation EDR, puis à introduire l'eau concentrée dans l'installation EWT.

9. Procédé selon la revendication 1, dans lequel les électrodes du réacteur bipolaire sont espacées de 10 mm à 30 mm.

10. Procédé selon la revendication 1, dans lequel une densité de courant du réacteur bipolaire est de 40 mA/cm² à 80 mA/cm².

11. Procédé selon la revendication 1, consistant en outre à utiliser une installation pour la collecte ou le traitement du gaz dégagé durant la réaction.

12. Procédé selon la revendication 1, consistant en outre à ajuster le pH des eaux ayant subi un traitement EWT quand la réaction est terminée, et à évacuer les eaux ayant subi un traitement EWT.

13. Procédé selon la revendication 1, dans lequel l'unité finale de l'installation EWT comprend en outre un filtre au charbon activé ou un filtre en céramique.

14. Procédé selon la revendication 1, consistant en outre à utiliser une installation pour faire circuler une partie des eaux ayant subi un traitement EWT et pour réintroduire ladite partie des eaux ayant subi un traitement EWT dans l'installation EDR.
